# EUROPÄISCHE PATENTSCHRIFT

(11) **EP 2 369 082 B1**
(45) Veröffentlichungstag und Bekanntmachung des Hinweises auf die Patenterteilung: **24.08.2016**
(21) Anmeldenummer: 11159798.5
(22) Anmeldetag: 25.03.2011
(51) Int. Cl.: E04B 9/16

(54) **Verbindungssystem für zwei kreuzende C-Profile**
Connection system for two crossing C-profiles
Système de liaison de deux profilés en C croisés

(30) Priorität: 25.03.2010 DE 102010016141
(43) Veröffentlichungstag der Anmeldung: 28.09.2011
(73) Patentinhaber: Protektorwerk Florenz Maisch GmbH & Co. KG, 76571 Gaggenau (DE)
(72) Erfinder: Giambalvo, Salvatore, 76593, Gernsbach (DE); Hertweck, Theo, 76532, Baden-Baden (DE); Studniorz, Thilo, 09306, Rochlitz (DE)
(74) Vertreter: Geitz Truckenmüller Lucht

(56) Entgegenhaltungen:
- EP-B1- 1 413 692
- DE-C2- 4 335 000

## Beschreibung

Die vorliegende Erfindung betrifft ein Verbindungssystem für zwei, einander kreuzende, übereinander angeordnete, im Querschnitt C-förmige Profile, umfassend einen Kreuzschnellverbinder und zwei C-Profile, vorzugsweise CD-Profile, jeweils mit einem Profilsteg, an den sich jeweils zwei seitliche Profilflansche in einem zumindest im wesentlichen rechten Winkel anschließen und jeweils von einer äußeren Profilkante abgeschlossen sind, wobei der Kreuzschnellverbinder eine das im Einbauzustand obere Profilübergreifende Stegplatte umfasst, die beidseits von jeweils einer Umlenkkante begrenzt ist, von der jeweils ein Befestigungsschenkel in zumindest annähernd rechtwinkligem Winkel abgekantet ist und sich von den der Stegplatte abgewandten Längskanten der Befestigungsschenkel jeweils beidseits angeformte Hakenelemente seitlich forterstrecken und diese Hakenelemente im Einbauzustand die umgebugte Profilkante des jeweils unteren Profils, vorzugsweise formschlüssig, federnd untergreifen und in die Stegplatte im Bereich der Umlenkkanten je eine die Umlenkkante übergreifende Öffnung eingearbeitet ist, aus der jeweils zumindest eine Federzunge ausgestanzt ist.

Ein solches Verbindungssystem mit einem Kreuzschnellverbinder zur Verbindung von zwei sich kreuzenden C-Profilen ist aus der europäischen Patentschrift EP 1 413 692 B1 vorbekannt. Derartige Kreuzschnellverbinder für zwei aufeinanderliegende, sich rechtwinklig kreuzende U- und/oder C-Profilschienen gehören demnach zum Stand der Technik, wobei in der Regel eine das jeweils obere Profil übergreifende, oben liegende Stegplatte beidseits von zwei Umlenkkanten begrenzt ist, von denen sich je ein Befestigungsschenkel rechtwinklig nach unten erstreckt. Darüber hinaus sind dann diese Befestigungsschenkel mit seitlich vorspringenden Hakenvorsprüngen versehen, die derart in die im Einbauzustand untere Profilschiene einhakbar sind, dass die erwähnten Hakenvorsprünge den Umbug der Profilkanten des im Einbauzustand unteren Profils beidseits untergreifen.

Ein solches Verbindungssystem ist auch aus der EP 1 288 384 A1 vorbekannt. Dabei weist der bei diesem System eingesetzte Kreuzschnellverbinder eine bei bestimmungsgemäßen Einbau das untere C-Profil untergreifende Haltenase mit einer über die gesamte Breite der Haltenase verlaufenden Sicke auf.

Derartige Kreuzschnellverbinder werden üblicherweise zur Herstellung so genannter abgehängter Decken benötigt. Dabei besteht das Problem, dass zunächst eine gitterartige Profilkonstruktion von der bereits bestehenden eigentlichen Raumdecke abgehängt werden muss, so dass dann an diese abhängte Profilkonstruktion die Deckenplatten der abgehängten Decke befestigt werden können. Dabei hat es sich bewährt, die gitterartig aufgebaute Profilkonstruktion in den Kreuzungspunkten mit Kreuzschnellverbindern möglichst ohne weiteres Werkzeug händisch vor Ort zu verbinden. Die Kreuzschnellverbinder dienen also zum Aufbau und zur schnellen Herstellung einer fachwerkartigen Verbindung der eingesetzten Profile, an denen letztlich die Deckenpaneele oder Deckenplatten befestigt werden können. Die Konstruktion der abgehängten Decke wird zumeist mittels separater Abhänger an der eigentlichen Decke befestigt.

Im Interesse einer möglichst erleichterten Montage sollen die Profile im Bereich der Kreuzungspunkte durch die Kreuzschnellverbinder idealerweise werkzeugfrei von Hand verbunden werden können. Dabei hat es sich bewährt, wenn eine Stegplatte das obere Profil übergreift und von dieser Stegplatte zwei Befestigungsschenkel im Wesentlichen rechtwinklig abgekantet sind und an der der Stegplatte abgewandten Längskante dieser Befestigungsschenkel zwei seitlich vorspringende Hakenelemente angeformt sind, die einfach in den Umbug der seitlichen Profilflansche des unteren C- oder U-förmigen Profils eingeklippst werden. Dabei sollte die Federkonstante der Kreuzschnellverbinder so gewählt sein, dass die Verbindung mehr oder minder von Hand eingeklippst werden kann, indem hierbei die Profilflansche des C- oder U-förmigen Profils so weit aufgedehnt werden, dass die Hakenelemente unter den Umbug der Profilkante des unteren Profils geschoben werden können. Die Federkonstante darf daher nicht zu groß gewählt werden. Andererseits darf die Feder auch nicht zu weich eingestellt werden, da ansonsten eine Relativbewegung der auf diese Weise miteinander verbundenen abgehängten Profile nicht ausgeschlossen ist und etwa bei Windlast die abgehängte Decke zu Klappergeräuschen neigt. Es hat sich daher bewährt, wie etwa auch aus der DE 43 35 000 C2 bekannt, zusätzlich aus der Stegplatte Federzungen auszustanzen, die in Richtung des oberen Profilelementes vorspringen und somit das obere Profilelement in Richtung des unteren Profilelementes federnd andrücken. Durch die hierdurch realisierte Doppelfeder aus Federzungen und Hakenelementen wird eine verbesserte Verbindung der beiden Profile im Kreuzungspunkt gewährleistet, die idealerweise die fraglichen Klappergeräusche verhindert. Dabei besteht auch hier das Problem, dass eine erleichterte Montage in der Regel mit einer höheren Klapperneigung der Decke bezahlt wird. In DE 43 35 000 C2 ist ein Verbindungssystem beschrieben, das dem des einleitenden Teils des Anspruchs 1 entspricht.

Die EP 1 413 692 B1 behandelt zusätzlich das Problem, dass beim Aufbau derartiger Decken nicht immer durchgehend C-Profilschienen, sondern gegebenenfalls auch U-Profil schienen zum Einsatz kommen, wobei bei der aus der EP 1 413 692 B1 vorbekannten Lösung die aus der Stegplatte ausgestanzte Federzunge derart seitlich über die von den Befestigungsschenkeln jeweils gebildete Ebene vorspringt, dass eine verbesserte Anlage auch im Falle der Verwendung von U-Profilen gegeben ist.

Der Grundgedanke der aus der EP 1 413 692 B1 vorbekannten Lösung besteht also darin, die fraglichen Kreuzschnellverbinder idealerweise für unterschiedliche Profile einsetzbar zu gestalten.

Ein anderes, in der genannten Patentschrift nicht angesprochenes, Problem besteht darin, dass auch im Bereich der C-Profilschienen trotz entsprechender Normung der CD-Profile in der DIN 18182 im Rahmen dieser DIN sowohl ein runder Umbug als auch eine schräge Abkantung der Profilkanten der seitlichen Profilflansche des C-Profils zulässig sind. Es besteht also neben dem Problem der Anpassung der Federkonstante das Problem, dass die Hakenelemente in der Regel entweder nur mit dem runden Umbug oder der schrägen Kante eine formschlüssige Verbindung ausbilden können, so dass die Verbindung mit dem jeweils anderen Profiltyp nicht spielfrei ausgebildet ist, was wiederum durch eine größere Federkonstante der Federzungen ausgeglichen werden müsste, mit entsprechenden Nachteilen bei einer rein händischen Montage der entsprechenden Kreuzschnellverbinder in den besagten Kreuzungspunkten.

Der Erfindung liegt daher die Aufgabe zu Grunde, ein Verbindungssystem mit einem Kreuzschnellverbinder und zwei C-Profilen zu schaffen, das einerseits eine möglichst spielfreie Verbindung der im Kreuzungspunkt übereinander angeordneten Profile sowie andererseits eine erleichterte, vorzugsweise werkzeugfreie Montage der Kreuzschnellverbinder ermöglicht und darüber hinaus eine optimale Verbindung der erwähnten CD-Profile unabhängig davon leistet, ob die entsprechenden Profile mit einem runden oder einem geraden bzw. schräg angestellten Umbug versehen sind.

Die Lösung dieser Aufgabe gelingt durch ein Verbindungssystem mit einem Kreuzschnellverbinder und zwei C-Profilen gemäß den Merkmalen des Hauptanspruchs. Vorteilhafte Ausgestaltungen dieses Verbindungssystems sind den Ansprüchen 2 bis 11 zu entnehmen.

Dadurch, dass bei einem Kreuzschnellverbinder eines gattungsgemäßen Verbindungssystems die seitlich vorspringenden Hakenelemente jeweils mit einer sich über den gesamten Außenumfang des Hakenelements bis zum Rand des Hakenelements erstreckenden, zumindest fast durchgehend verlaufenden Sicke versehen sind, also das Hakenelement im Anlagebereich an den Umbug des unteren Profils durch die Ausformung der Sicke eine vergrößerte Auflagefläche besitzt, so dass bei bestimmungsgemäßen Einbau die die umgebugten Profilkanten jeweils innerhalb der Mündung der Sicke aufliegen. Dadurch ergeben sich zwei definierte Anlagepositionen der Hakenelemente in der durch die jeweils obere Profilkante der Profilflansche des im Einbauzustand unteren Profils gebildeten Hinterschneidungen. In beiden Positionen besteht eine zumindest nahezu vollständig spielfreie und formschlüssige Verbindung zwischen den Hakenelementen und dem Umbug der Profilkanten des im Einbauzustand unteren CD-Profils. Zumindest in den meisten Fällen wird für das im Einbauzustand untere Profil eine echte Zwei-Punkt-Lagerung verwirklicht.

Die im Bereich des Hakenelements angeordnete, umlaufende Sicke bewirkt darüber hinaus eine größere Steifigkeit der Hakenelemente, so dass auch bei andauernder und/oder vergrößerter Belastung ein Abkanten oder Wegknicken dieser Hakenelemente messbar erschwert ist. Umgekehrt kann diese größere Steifigkeit der Hakenelemente bei gleichbleibender Belastung zur Verwendung einer geringeren Materialstärke und damit zu einer erheblichen Materialersparnis bei der Produktion des erfindungsgemäßen Kreuzschnellverbinders genutzt werden.

Die Form des Hakenelementes mit einer umlaufenden Sicke bietet also einerseits den Vorteil einer gleichermaßen spielfreien Verbindung, unabhängig davon, ob es sich um einen runden oder geraden Umbug im Bereich der Profilkanten handelt, und kombiniert diesen Vorteil zusätzlich mit einer größeren Steifigkeit und der Möglichkeit einer entsprechenden Materialersparnis, zumindest in diesem Bereich des Kreuzschnellverbinders. Darüber hinaus entsteht durch die V-, U- und/oder wellenförmige Profilierung der Hakenelemente durch die Sicke eine vergrößerte Anlagefläche der Hakenelemente im Bereich des Umbugs der Profilkanten.

In weiterer Ausgestaltung ist auch bei diesem Kreuzschnellverbinder des Verbindungssystems jeweils im Bereich der Umlenkkanten eine jeweils die Umlenkkanten übergreifende Öffnung vorgesehen, aus der im Unterschied zum Stand der Technik nicht nur eine, sondern zwei einander gegenüberliegend angeordnete Federzungen ausgestanzt sind. Ebenfalls im Unterschied zum Stand der Technik sind diese Federzungen nicht mit einer im Wesentlichen senkrecht zu der unterhalb der Stegplatte angeordneten Längserstreckung des oberen Profils verlaufenden Biegekante, sondern um eine parallel hierzu verlaufenden Haupt-Biegekante gegenüber der Stegplatte in Richtung des in der Einbaulage von der Stegplatte übergriffenen oberen Profils abgeknickt.

Die Federzungen leisten durch ihre Federwirkung in vertikaler Richtung einen Beitrag zur Unterdrückung möglicher Klappergeräusche zwischen dem oberen und unteren Profil. Sie greifen überdies von innen an den Profilkanten des oberen Profils ein und wirken somit einem möglichen Einknicken der Profilschenkel des oberen Profils nach innen unter Last entgegen.

Die Federzungen sind mittels eines weiteren Umknickens der Federzungen um wenigstens eine weitere Biegekante, die in einem schrägen Winkel gegenüber der Haupt-Biegekante angestellt ist, zusätzlich abgeknickt. Dies erfüllt eine Doppelfunktion, nämlich einerseits die Funktion einer verbesserten spielfreien Verbindung zwischen dem unteren und oberen Profil, die dem bereits erwähnten Klapperschutz dient, sowie andererseits auch eine verbesserte Kraftwirkung von innen nach außen gegenüber dem im Einbauzustand anliegenden Profilflansch des oberen Profils.

In abermals verbesserter Ausgestaltung ist in einem weiteren spitzen Winkel zur ersten Biegekante in die Federzunge eine zweite Biegekante eingearbeitet, mit der eine Anstelllasche entgegen der eigentlichen Abknickrichtung in Richtung des oberen Profils gegenüber der übrigen Federzunge aufklappbar ist, so dass diese Anstelllasche inwändig am Umbug der oberen Profilkante des oberen Profils beidseits ansteht. Diese Anstelllasche ist in der Lage, etwa nach innen wirkende Kräfte der seitlichen Profilflansche des oberen Profils aufzunehmen oder bringt anders ausgedrückt eine nach außen wirkende Federkraft auf die seitlichen Profilflansche des oberen Profils auf. Diese zusätzliche Versteifung des oberen Profils trägt einer häufigen Ermüdungserscheinung der Befestigung derart abgehängter Decken Rechnung, bei denen sich ein Versagen der Befestigungsmaterialien zumeist dadurch äußert, dass die zur Befestigung eingesetzten C-Profile unter der einwirkenden Dauerbelastung dahingehend ermüden, dass die seitlichen Profilflansche der C-Profile nach innen gedrückt werden, mit der Folge, dass die abgehängte Decke in diesen Bereichen Unebenheiten aufweist bzw. durchhängt. Über die federnden Anstelllaschen wird hier eine weitere Versteifungswirkung und weitere Stabilisierung der abgehängten Decke erreicht.

In weiterer Ausgestaltung ist die, das im Einbauzustand obere Profil übergreifende, Stegplatte mit zumindest zwei weiteren Versteifungssicken versehen, die so angeordnet sind, dass der Mittelbereich der Stegplatte von diesen Sicken ausgespart ist. Durch die zusätzlichen Versteifungssicken wird eine weitere Versteifung der Stegplatte erreicht, die entweder zu einer größeren Steifigkeit der Befestigung führt oder zu weiteren Materialersparnissen genutzt werden kann.

In fertigungstechnischer Hinsicht, aber auch zur Versteifung der Kreuzschnellverbinder, hat es sich bewährt, wenn sowohl die Befestigungsschenkel als auch die Stegplatte des Kreuzschnellverbinders und damit die gesamte Abwicklung des Kreuzschnellverbinders mit einer umlaufenden Sicke versehen sind.

Eine weitere Versteifung des Kreuzschnellverbinders kann durch eine entsprechende Bearbeitung der Oberfläche des Kreuzschnellverbinders erreicht werden, indem die Oberfläche ganz oder teilweise entweder mit einer Pearlstruktur, einer Fischstruktur oder einer Perforierung versehen ist. Auch dies dient zu einer größeren Versteifung des Kreuzschnellverbinders, die entweder zu einer verbesserten Verbindung oder einer Materialersparnis genutzt werden kann.

Dadurch dass sich der zumindest im wesentlichen U-profilartige Querschnitt zu seiner Offenseite des Profils hin leicht erweitert, können die Kreuzschnellverbinder gestapelt werden. Dies erleichtert die Verpackung der Kreuzschnellverbinder, sowie deren Mitnahme auf der Baustelle, um etwa auf einem Gerüst eine abgehängte Decke zu montieren.

Zur Ausbildung eines verbesserten Kraftschlusses zwischen dem Kreuzschnellverbinder und dem an den Befestigungsschenkeln anliegenden oberen Profil ist es sinnvoll, wenn die Befestigungsschenkel mit Durchgangsbohrungen, etwa zur Ausbildung einer Schraubverbindung zwischen Kreuzschnellverbinder und oberem Profil, versehen sind.

Es hat sich ferner bewährt, die, das in der Einbaulage obere, Profil übergreifende, Stegplatte des Kreuzschnellverbinders derart vorzuspannen, dass diese Stegplatte in Richtung der Offenseite des Kreuzschnellverbinders zumindest leicht gewölbt ist. Die hierdurch aufgespannte Feder wirkt einem möglichen Durchhängen des eingebauten Kreuzschnellverbinders unter Last mit der Folge einer Wölbung der Stegplatte in entgegengesetzter Richtung wirksam entgegen.

In vorteilhafter Weiterbildung sind an die Stegplatten des Kreuzschnellverbinders beidseits Anschlussstege angeformt, so dass mehrere Kreuzschnellverbinder unter Einschluss jeweils einer Sollbruchstelle zu einer Stangen- oder Rollenware zusammengefasst werden können. Dies hat den Vorteil, dass die Kreuzschnellverbinder nicht gestapelt oder als Schüttgut ausgeliefert werden müssen, sondern in einem stangen- oder rollenförmigen Spender angeboten werden können, die z. B. auf der Baustelle vorgehalten werden können.

Die Erfindung wird nachstehend anhand eines in der Zeichnung nur schematisch dargestellten Ausführungsbeispiels näher erläutert.

Es zeigen
- Figur 1:: einen Kreuzschnellverbinder in perspektivischer Ansicht,
- Figur 2:: eine Abwicklung eines Kreuzschnellverbinders in alternativer Ausführung,
- Figur 3:: eine Verbindung von zwei CD-Profilen mittels eines Kreuzschnellverbinders gemäß Fig. 1 in einer Querschnittansicht,
- Figur 4:: ein in Fig. 3 mit IV bezeichnetes Detail der Verbindung des Kreuzschnellverbinders mit dem unteren der zwei CD-Profile und
- Figur 5:: eine Draufsicht auf die Auflagefläche des Kreuzschnellverbinders im Bereich der in Figur 4 dargestellten Verbindung.

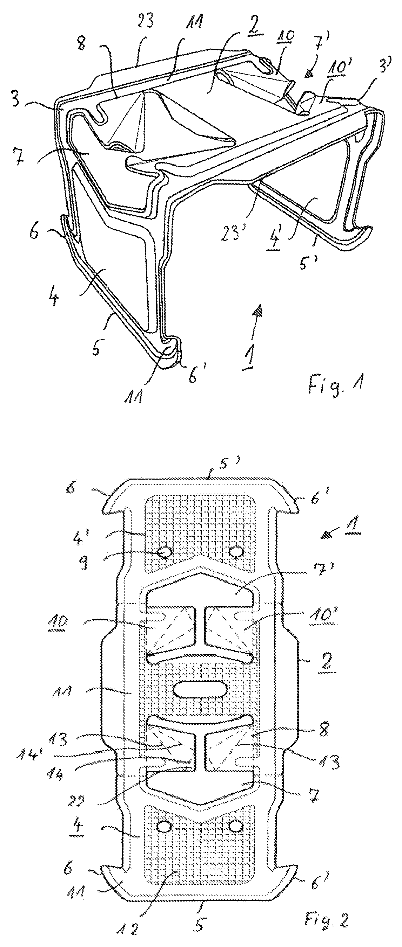

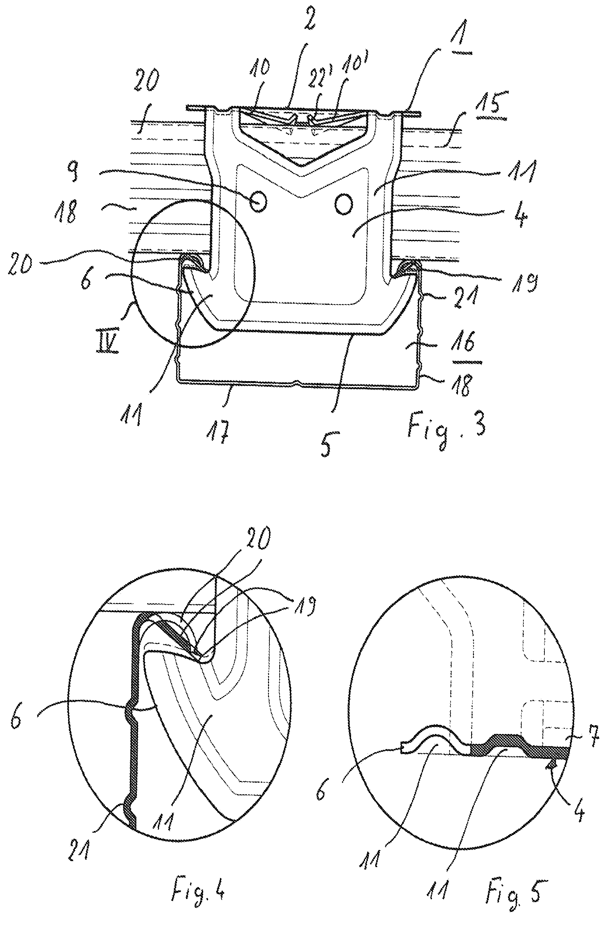

Gemäß der perspektivischen Darstellung eines Kreuzschnellverbinders 1 in Fig. 1 besteht der Kreuzschnellverbinder 1 im Wesentlichen aus einer Stegplatte 2, die seitlich von zwei Umlenkkanten 3, 3' begrenzt ist. An diesen Umlenkkanten 3, 3' ist je ein Befestigungsschenkel 4, 4' zumindest annähernd rechtwinklig gegenüber der Stegplatte 2 abgeknickt. Von den Befestigungsschenkeln 4, 4' erstreckt sich jeweils im Bereich der von der Stegplatte 2 abgewandten Längskanten 5, 5' beidseits je ein seitliches Hakenelement 6, 6' fort. Im Bereich der Umlenkkanten 3, 3' ist je eine Öffnung 7, 7', die sich über die Umlenkkante 3, 3' des Kreuzschnellverbinders 1 forterstreckt, aus der Stegplatte 2 ausgeschnitten. Aus diesen Öffnungen 7, 7' sind jeweils Federzungen 10, 10' einander gegenüberliegend ausgestanzt. Sowohl die Befestigungsschenkel 4, 4' als auch die Stegplatte 2 sind mit einer sich über den gesamten Außenumfang des Kreuzschnellverbinders 1 erstreckenden, mehr oder minder durchgehenden Sicke 11 versehen. Dabei verläuft die umgehende Sicke 11 auch im Bereich der Hakenelemente 6, 6', so dass diese in der Draufsicht auf diese Hakenelemente 6, 6 in einer aus der perspektivischen Darstellung in Figur 1 nur andeutungsweise ersichtlichen Weise profiliert sind. Die durch die Sicke 11 verursachte Profilierung der Hakenelemente 6, 6' ist in Figur 5 besser zu sehen.

Im Übrigen können bedarfsweise an die Breitseiten der Stegplatte beidseits jeweils Anschlussstege 23, 23' angeformt sein, über die mehrere Kreuzschnellverbinder jeweils unter Einschluss einer Sollbruchstelle zu einer Stangen- und/oder Rollenware verbindbar sind.

Die umlaufende Sicke 11 ist in der in einer Draufsicht dargestellten Abwicklung einer alternativen Ausgestaltung des Kreuzschnellverbinders 1 gemäß Fig. 2 besser sichtbar. Der Kreuzschnellverbinder 1 gemäß Fig. 2 ist insbesondere deshalb gegenüber der Darstellung in Fig. 1 alternativ ausgebildet, weil die Oberfläche des Kreuzschnellverbinders 1 mit einer Profilierung in Form einer Pearlstruktur 12 versehen ist. Darüber hinaus sind in der Abwicklung mit gestrichelten Linien eine Haupt-Biegekante 8 zum Abnicken der Federzungen 10, 10' aus der Stegplatte 2 dargestellt. Die Federzungen 10, 10 werden entlang der weiteren in unterschiedlichen Winkeln gegenüber der Haupt-Biegekante 8 angestellten weiteren Biegenkanten 13 und 14 zusätzlich in sich abgeknickt, so dass eine entgegen der Knickrichtung um die Haupt-Biegekante 8 angestellte Anstelllasche 22, 22' jeweils an die Federzungen 10, 10'angeformt ist.

Fig. 3 zeigt in einer Querschnittansicht die Ausbildung einer Kreuzverbindung mittels eines derartigen Kreuzschnellverbinders 1 eines im Einbauzustand oberen Profils 15 mit einem im Einbauzustand unteren Profil 16. Es handelt sich bei beiden Profilen 15, 16 um so genannte CD-Profile, wie sie üblicherweise zum Aufbau abgehängter Decken verwendet werden. Dabei weisen in dem Ausführungsbeispiel gemäß Figur 3 die seitlichen Befestigungsschenkel 4, 4' des Kreuzschnellverbinders 1 Durchgangsbohrungen 9 auf, um etwa im Wege einer Schraubverbindung etwa mit selbstschneidenden Gewindeschrauben das obere Profil 15 gegenüber dem Kreuzschnellverbinder 1 festzulegen.

Derartige CD-Profile, also hier die zu verbindenden Profile 15, 16 besitzen einen im Wesentlichen U-förmigen Querschnitt, wobei sich an einen Profilsteg 17 zwei seitliche Profilflansche 18 in einem im Wesentlichen rechten Winkel anschließen. Die im Öffnungsbereich der Profile 15, 16 beidseitigen Profilkanten 19 des Profilflansche 18 sind jeweils mit einem je nach Ausgestaltung geraden oder runden Umbug 20 angeformt, der in diesem Bereich eine Hinterschneidung ausbildet, in die gemäß der DetailDarstellung in Fig. 4 die seitlich ausgestellten Hakenelemente 6, 6' des Kreuzschnellverbinders 1 im Einbauzustand bestimmungsgemäß eingreifen.

Außerdem sind auch die seitlichen Profilflansche 18 mit entsprechenden Versteifungssicken 21 versehen.

Wie ebenfalls aus Fig. 4 ersichtlich, wird das obere Profil 15 von der Stegplatte 2 des Kreuzschnellverbinders 1 übergriffen, während unterseitig die seitlichen Hakenelemente 6, 6' in die von dem Umbug 20 gebildete Hinterscheidung der oberen Profilkante 19 eingreifen, das untere Profil 16 mit dem oberen Profil 15 in dem Kreuzungspunkt der beiden Profile 15, 16 bestimmungsgemäß verbinden.

Dabei verlaufen das obere Profil 15 und das untere Profil 16 in dem in Fig. 4 dargestellten Ausführungsbeispiel im Kreuzungspunkt vertikal zueinander.

Zur Verbesserung des Anpressdrucks zwischen den beiden Profilen 15, 16 sind aus der Stegplatte 2, wie bereits erwähnt, im Bereich der Öffnungen 7, 7' jeweils zwei Federzungen 10, 10' ausgestanzt, die um eine entsprechende erste Biegekante 13 in Richtung des oberen Profils 15 abknickbar sind und somit das obere Profil 15 federnd auf das untere Profil 16 andrücken. Zusätzlich wird um eine zweite Biegekante 14 eine Anstelllasche 22, 22' der Federzungen 10, 10' entgegen der eigentlichen Abknickrichtung der Federzungen 10, 10' abgeknickt. Darüber hinaus wird um eine dritte Biegekante 14' die Federungen 10, 10' jeweils erneut in entgegengesetzte Richtung abgeknickt und hierdurch eine weitere Versteifung der Federzungen 10, 10' erzielt.

Dabei drücken die Anstelllaschen 22, 22' inwändig gegen den Umbug 20 des oberen Profils 15 und bringen somit eine Federkraft nach außen quer zur Längserstreckung des oberen Profils 15 auf, die letztlich verhindert, dass die Profilflansche 18 des oberen Profils 15 nach innen ausweichen oder einknicken können.

Wie ebenfalls aus Fig. 4 ersichtlich, können CD-Profile wahlweise je nach Hersteller mit einem runden oder schrägen Umbug 20 versehen sein. Hierdurch ergibt sich eine unterschiedliche Anlage der seitlich ausgestellten Hakenelemente 6, 6' im Bereich der durch diesen Umbug 20 ausgebildeten Hinterschneidungen. Die über den gesamten Außenumfang des Hakenelementes 6, 6' angeordnete Sicke 11 bewirkt eine Profilierung der Hakenelemente 6, 6' bzw. eine dreidimensionale Ausgestaltung, so dass sich zunächst eine vergrößerte Auflage- oder Anlagefläche der Hakenelemente 6, 6' im Bereich des Umbugs 20 ergibt. Durch die entsprechende Profilierung ergibt sich auch eine schräge Anlagefläche der Hakenelemente 6, 6' gegenüber der durch den Umbug 20 gebildeten Hinterschneidung und im Ergebnis je nach Ausgestaltung, ob es sich um einen schrägen (durchgehend schwarz dargestellt) oder runden Umbug 20 (als Linienzeichnung dargestellt) handelt, zwei unterschiedliche Anlagebereiche des Hakenelementes 6, 6' relativ zu dem schrägen oder runden Umbug 20 ergeben. Dabei ist die Anlage des Hakenelementes 6 an den schrägen Umbug 20 mit einer durchgezogenen Linie und die alternative Anlage des Hakenelementes 6 an einen runden Umbug gestrichelt dargestellt. In beiden Fällen ergibt sich jedoch eine jeweils definierte weitgehend form-schlüssige Anlage und damit eine zumindest weitgehend spielfreie Verbindung zwischen dem oberen Profil 15 und dem unteren Profil 16.

Die bereits angesprochene Profilierung der Hakenelemente 6, 6' mit einer durchgehenden Sicke 11 ist in der Draufsicht auf die Hakenelement 6 entlang des Befestigungsschenkels 4 in Fig. 5 in einer weiteren Detailansicht dargestellt. Bei dieser Ausführung ergibt sich den dargestellten Bereich in der Draufsicht sogar eine Wellenform. Die Profilierung der Hakenelemente 6, 6' hat den Vorteil einer vergrößerten Anlagefläche und zweier definierter Verbindungsstellungen im Bereich des Umbugs 20, die beide eine zumindest nahezu spielfreie Verbindung des oberen und unteren Profils 15, 16 garantieren.

Trotz der sich insoweit ergebenden unterschiedlichen Anlagepositionen ergibt sich auf Grund der Profilierung des Hakenelementes 6 durch die Sicke 11 eine jeweils definierte, nahezu formschlüssige Anlage des Hakenelementes 6 in der durch den Umbug 20 gebildeten Hinterschneidung.

### BEZUGSZEICHENLISTE

- 1: Kreuzschnellverbinder
- 2: Stegplatte
- 3, 3': Umlenkkante
- 4, 4': Befestigungsschenkel
- 5, 5': Längskante
- 6, 6': Hakenelement
- 7, 7': Öffnung
- 8: Haupt-Biegekante
- 9: Durchgangsbohrung
- 10, 10': Federzunge
- 11: Sicke
- 12: Pearlstruktur
- 13: erste Biegekante
- 14: zweite Biegekante
- 14': dritte Biegekante
- 15: oberes Profil
- 16: unteres Profil
- 17: Profilsteg
- 18: Profilflansch
- 19, 19': Profilkante
- 20: Umbug
- 21: Versteifungssicke
- 22, 22': Anstelllasche
- 23, 23': Anschlusssteg

## Patentansprüche

1. Verbindungssystem für zwei, einander kreuzende, übereinander angeordnete, im Querschnitt C-förmige Profile (15, 16), umfassend einen Kreuzschnellverbinder (1) und zwei C-Profile, vorzugsweise CD-Profile, jeweils mit einem Profilsteg (17), an den sich jeweils zwei seitliche Profilflansche (18) in einem zumindest im wesentlichen rechten Winkel anschließen und jeweils von einer äußeren Profilkante (19, 19') abgeschlossen sind, wobei der Kreuzschnellverbinder (1) eine das im Einbauzustand obere Profil (15) übergreifende Stegplatte (2) umfasst, die beidseits von jeweils einer Umlenkkante (3, 3) begrenzt ist, von der jeweils ein Befestigungsschenkel (4, 4') in zumindest annähernd rechtwinkligem Winkel abgekantet ist und sich von den der Stegplatte (2) abgewandten Längskanten (5, 5') der Befestigungsschenkel (4, 4') jeweils beidseits angeformte Hakenelemente (6, 6') seitlich forterstrecken und diese Hakenelemente (6, 6') im Einbauzustand die umgebugte Profilkante (19, 19') des jeweils unteren Profils (16), vorzugsweise formschlüssig, federnd untergreifen und in die Stegplatte (2) im Bereich der Umlenkkanten (3, 3') je eine die Umlenkkante (3, 3') übergreifende Öffnung (7, 7') eingearbeitet ist, aus der jeweils zumindest eine Federzunge (10, 10') ausgestanzt ist,
**dadurch gekennzeichnet, dass**
die seitlichen Hakenelemente (6, 6') jeweils mit einer sich über den zumindest annähernd gesamten Außenumfang des Hakenelementes (6, 6') bis zum Rand des Hakenelements erstreckenden Sicke (11) derart versehen sind, dass sich in der Draufsicht eine zumindest annähernd V-, U- und/oder wellenförmige, vergrößerte Auflagefläche, vorzugsweise eine spielfreie Zwei-Punkt-Auflage, verwirklicht durch die Auflagerung der Außenkante der umgebugten Profilkante (19, 19') und im Bereich des Umbugs (20) der Profilkante jeweils auf dem Hakenelement (6, 6'), für die umgebugte Profilkante (19, 19') ergibt und bei bestimmungsgemäßem Einbau die äußeren Profilkanten (19, 19') jeweils innerhalb der Mündung der Sicke (11) aufliegen.

2. Verbindungssystem nach Anspruch 1, **dadurch gekennzeichnet, dass** im Bereich der Umlenkkanten (3, 3') je eine die Umlenkkanten (3, 3') jeweils übergreifende Öffnung (7, 7') eingearbeitet ist, aus der jeweils zwei einander gegenüberliegend angeordnete Federzungen (10, 10') ausgestanzt sind, die jeweils übereine Haupt-Biegekante (8) mit der Stegplatte (2) verbunden sind, wobei diese Haupt-Biegekante (8) beidseits derart angeordnet ist, dass sie zumindest annähernd parallel zur Längserstreckung des im Einbauzustand unterhalb der Stegplatte (2) angeordneten oberen Profils (15) verlaufen, so dass die Federzungen (10, 10') entsprechend annähernd parallel zur Längserstreckung des oberen Profils (15) in Richtung des unterhalb der Stegplatte (2) angeordneten oberen Profils (15) abknickbar sind.

3. Verbindungssystem nach Anspruch 2, **dadurch gekennzeichnet, dass** in die Federzungen (10, 10') zumindest eine weitere Biegekante (13, 14) in einem spitzen Winkel zur Haupt-Biegekante (8) eingearbeitet ist.

4. Verbindungssystem nach Anspruch 3, **dadurch gekennzeichnet dass** entgegen der Abknickrichtung der ersten Biegekante (13) in Richtung des angrenzenden oberen Profils (15) eine zweite Biegekante (14) in entgegensetzter Richtung derart abknickbar ist, dass je eine Anstelllasche (22, 22') der Federzungen (10, 10') in entgegengesetzter Richtung derart angeformt ist, dass die Anstelllasche (22, 22') im spitzen Winkel gegenüber der übrigen Federzunge (10, 10') aufgeklappt ist.

5. Verbindungssystem nach einem der vorhergehenden Ansprüche, **dadurch gekennzeichnet, dass** in die Stegplatte (2) zumindest zwei Versteifungssicken (11) derart eingearbeitet sind, dass der Mittelbereich der Stegplatte (2) von diesen Versteifungssicken (11) ausgespart ist.

6. Verbindungssystem nach einem der vorhergehenden Ansprüche, **dadurch gekennzeichnet, dass** entlang der Außenkante des Kreuzschnellverbinders (1) eine zumindest annähernd durchlaufende Versteifungssicke (11) eingearbeitet ist.

7. Verbindungssystem nach einem der vorhergehenden Ansprüche, **dadurch gekennzeichnet, dass** die Oberfläche des Kreuzschnellverbinders (1) vollständig oder teilweise strukturiert, vorzugsweise mit einer Pearlstruktur (12) und/oder Perforierung, ist.

8. Verbindungssystem nach einem der vorhergehenden Ansprüche, **dadurch gekennzeichnet, dass** die Befestigungsschenkel (4, 4') über ihre jeweiligen Umlenkkanten (3, 3") derart abgeknickt sind, dass sich der U-profilartige Querschnitt des Kreuzschnellverbinders (1) in Richtung der von der Stegplatte (2) abgewandten Offenseite des Kreuzschnellverbinders (1) hin zumindest leicht erweitert.

9. Verbindungssystem nach einem der vorhergehenden Ansprüche, **dadurch gekennzeichnet, dass** die Befestigungsschenkel (4, 4') jeweils mit einer oder mehreren Durchgangsbohrungen, die einander in der Einbaulage vorzugsweise gegenüberliegend angeordnet sind, versehen sind.

10. Verbindungssystem nach einem der vorhergehenden Ansprüche, **dadurch gekennzeichnet, dass** die Stegplatte (2) in Richtung der Offenseite des U-Profilartigen Querschnitts des Kreuzschnellverbinders (1) gewölbt ist.

11. Verbindungssystem nach einem der vorhergehenden Ansprüche, **dadurch gekennzeichnet, dass** an die Breitseiten der Stegplatten (2) der Kreuzschnellverbinder (1) beidseits Anschlussstege (23, 23') jeweils derart angeformt sind, dass mehrere Kreuzschnellverbinder (1) über die Anschlussstege jeweils unter Einschluss einer Sollbruchstelle zu einer Stangen- oder Rollenware, jeweils umfassend mehrere miteinander verbundene Kreuzschnellverbinder (1), verbindbar sind.

## Claims

1. A connection system for two mutually crossing, stacked profiles (15, 16) which are C- shaped in the cross-section, comprising a cross-shaped quick connector (1) and two C-profiles, preferably CD-profiles, each with a profile web (17), which are adjoined by two lateral profile flanges (18) each at least substantially at a right angle, and are each terminated by an outer profile edge (19, 19'), wherein the cross-shaped quick connector (1) comprises a web plate (2) which engages beyond the profile (15) which is at the top in the installed state and which is bounded on both sides by one deflection edge (3, 3) each, from which one respective fastening limb (4, 4') is bent off in at least an approximately right angle, and hook elements (6, 6') which are integrally attached on both sides and face away from the web plate (2) extend laterally away from the longitudinal edges (5, 5') of the fastening limbs (4, 4'), and said hook elements (6, 6'), in the installed state, resiliently engage beneath the bent-back profile edge (19, 19') of the respective bottom profile (16), preferably in an interlocking fashion, and a respective opening (7, 7') which engages beyond the deflection edge (3, 3') is incorporated in the web plate (2) in the region of the deflection edges (3, 3'), from which at least one spring tongue (10, 10') is punched out,
**characterized in that**
the lateral hook elements (6, 6') are each provided with a bead (11) extending over the at least approximately entire outer circumference of the hook element (6, 6') up to the edge of the hook element in such a way that in a top view an at least V-shaped, U-shaped and/or undulating enlarged support surface is obtained for the bent-back profile edge (19, 19'), preferably a play-free two-point support, realised by the support of the outer edge of the bent-back profile edge (19, 19') and in the region of the bent-back part (20) of the profile edge respectively on the hook element (6, 6'), and in the case of installation as designated the outer profile edges (19, 19') each rest within the orifice of the bead (11).

2. A connection system according to claim 1, **characterized in that** in the region of the deflection edges (3, 3') one opening (7, 7') each which engages over the deflection edges (3, 3') is incorporated in the region of the deflection edges (3, 3'), from which two mutually oppositely arranged spring tongues (10, 10') are punched out, which are each connected via a main bending edge (8) to the web plate (2), wherein said main bending edge (8) is arranged on both sides in such a way that they extend at least approximately in parallel to the longitudinal extension of the upper profile (15) which is arranged in the installed state beneath the web plate (2), so that the spring tongues (10, 10') can be folded in a respectively approximately parallel manner in relation to the longitudinal extension of the upper profile (15) in the direction of the upper profile (15) arranged beneath the web plate (2).

3. A connection system according to claim 2, **characterized in that** at least one further bending edge (13, 14) is incorporated in the spring tongues (10, 10') at an acute angle to the main bending edge (8).

4. A connection system according to claim 3, **characterized in that** contrary to the folding direction of the first bending edge (13) in the direction of the adjoining upper profile (15) a second bending edge (14) can be folded in the opposite direction in such a way that one engaging tab (22, 22') each of the spring tongues (10, 10') is integrally attached in the opposite direction in such a way that the engaging tab (22, 22') is folded up at an acute angle in relation to the remaining spring tongue (10, 10').

5. A connection system according to one of the preceding claims, **characterized in that** at least two stiffening beads (11) are incorporated in the web plate (2) in such a way that the middle region of the web plate (2) is relieved from said stiffening beads (11).

6. A connection system according to one of the preceding claims, **characterized in that** an at least approximately continuous stiffening bead (11) is incorporated along the outer edge of the cross-shaped quick connector (1).

7. A connection system according to one of the preceding claims, **characterized in that** the surface of the cross-shaped quick connector (1) is fully or partly structured, preferably with a pearl structure (12) and/or perforation.

8. A connection system according to one of the preceding claims, **characterized in that** the fastening limbs (4, 4') are folded via their respective deflection edges (3, 3") in such a way that the U-profile-like cross-section of the cross-shaped quick connector (1) expands at least slightly in the direction of the open side of the cross-shaped quick connector (1) facing away from the web plate (2).

9. A connection system according to one of the preceding claims, **characterized in that** the fastening limbs (4, 4') are each provided with one or several through-holes, which are arranged in a preferably mutually opposite manner in the installation position.

10. A connection system according to one of the preceding claims, **characterized in that** the web plate (2) is curved in the direction of the open side of the U-profile-like cross-section of the cross-shaped quick connector (1).

11. A connection system according to one of the preceding claims, **characterized in that** connecting webs (23, 23') are each integrally attached on both sides to the broad sides of the web plates (2) of the cross-shape connectors (1), and that several cross-shaped quick connectors (1) can be connected via the connecting webs under inclusion of a predetermined breaking point to bar-shaped or roll goods, each comprising several mutually connected cross-shaped connectors (1).

## Revendications

1. Système de liaison pour deux profilés en C (15, 16) croisés et disposés l'un par-dessus l'autre, comprenant un raccord rapide en croix (1) et deux profilés en C, de préférence des profilés CD, avec chacun une âme de profilé (17) à laquelle deux ailes de profilé latérales (18) se raccordent sensiblement à angle droit et se terminent chacune par un bord de profilé extérieur (19, 19'), dans lequel le raccord rapide en croix (1) comprend une plaque d'âme (2) qui passe par-dessus le profilé supérieur (15) dans la position de montage, qui est délimitée de chaque côté par un bord de retournement (3, 3) dont un bras de fixation (4, 4') est plié au moins approximativement à angle droit, et des éléments formant crochets (6,6') formés sur les bords longitudinaux (5,5') des bras de fixation (4, 4') opposés à la plaque d'âme (2) s'écartent latéralement et ces éléments formant crochets (6, 6'), dans l'état d'installation, passent de façon élastique sous le bord profilé retourné (19, 19') du profilé intérieur (16), de préférence en correspondance de forme, et une ouverture (7, 7') couvrant le bord de retournement (3,3'), dans laquelle au moins une languette de ressort (10, 10') est découpée à l'emporte-pièce, est ménagée dans la plaque d'âme (2) au niveau de chacun des bords de retournement (3, 3'), **caractérisé en ce que** les éléments formant crochet (6, 6') latéraux sont munis chacun d'une moulure (11) qui s'étend sur au moins approximativement toute la circonférence extérieure de l'élément formant crochet (6, 6') jusqu'au bord de l'élément formant crochet, de façon à réaliser, en vue de dessus, une surface d'appui agrandie, au moins approximativement en forme de V, de U et/ou ondulée, qui donne de préférence un appui en deux points sans jeu pour le bord de profilé retourné (19, 19'), par l'appui du bord extérieur du bord de profilé retourné (19, 19') et au niveau du retournement (20) du bord de profilé sur l'élément formant crochet (6,6'), et dans l'installation correcte, le bords extérieurs du profilé (19, 19') reposent chacun à l'intérieur de l'embouchure de la moulure (11).

2. Système de liaison selon la revendication 1, **caractérisé en ce qu'**une ouverture (7, 7') couvrant les bords de retournement (3, 3') est ménagée au niveau de chacun des bords de retournement (3, 3'), dans laquelle deux languettes de ressort (10, 10') se faisant face sont découpées à l'emporte-pièce et reliées par un bord de pliage principal (8) à la plaque d'âme (2), ce bord de pliage principal (8) étant disposé des deux côtés de telle façon qu'il passe au moins à peu près parallèlement à l'étendue longitudinale du profilé supérieur (15) disposé en dessous de la plaque d'âme (2) dans l'état d'installation, de telle sorte que les languettes de ressort (10, 10') puissent être pliées à peu près parallèlement à l'étendue longitudinale du profilé supérieur (15) en direction du profilé supérieur (15) disposé en dessous de la plaque d'âme (2).

3. Système de liaison selon la revendication 2, **caractérisé en ce qu'**au moins un autre bord de pliage (13, 14) est formé dans les languettes de ressort (10, 10') selon un angle aigu par rapport au bord de pliage principal (8).

4. Système de liaison selon la revendication 3, **caractérisé en ce qu'**un deuxième bord de pliage (14) peut être plié dans le sens inverse du sens de pliage du premier bord de pliage (13) vers le profilé supérieur (15) contigu, de façon à former une patte d'appui (22, 22') des languettes de ressort (10, 10') dans le sens opposé, de telle manière que la patte d'appui (22, 22') soit ouverte à angle aigu par rapport au reste de la languette de ressort (10, 10').

5. Système de liaison selon l'une des revendications précédentes, **caractérisé en ce qu'**au moins deux moulures raidisseuses (11) sont formées dans la plaque d'âme (2) de telle manière que ces moulures raidisseuses (11) n'atteignent pas la partie centrale de la plaque d'âme (2).

6. Système de liaison selon l'une des revendications précédentes, **caractérisé en ce qu'**une moulure raidisseuse (11) au moins approximativement continue est formée le long du bord extérieur du raccord rapide en croix (1).

7. Système de liaison selon l'une des revendications précédentes, **caractérisé en ce que** la surface du raccord rapide en croix (1) est complètement ou partiellement structurée, de préférence avec une structure perlée (12) et/ou des perforations.

8. Système de liaison selon l'une des revendications précédentes, **caractérisé en ce que** les bras de fixation (4, 4') sont pliés sur leurs bords de retournement (3, 3") respectifs de telle manière que la section profilée en U du raccord rapide en croix (1) s'élargit en direction du côté ouvert du raccord rapide en croix (1) opposée à la plaque d'âme (2).

9. Système de liaison selon l'une des revendications précédentes, **caractérisé en ce que** les bras de fixation (4, 4') sont munis chacun d'un ou plusieurs alésages traversants qui sont de préférence disposés les uns en face des autres dans la position d'installation.

10. Système de liaison selon l'une des revendications précédentes, **caractérisé en ce que** la plaque d'âme (2) est bombée en direction du côté ouvert de la section profilée en U du raccord rapide en croix (1).

11. Système de liaison selon l'une des revendications précédentes, **caractérisé en ce que** les plaques d'âme (2) des raccords rapides en croix (1) présentent des deux côtés des barrettes de raccordement (23, 23') formées chacun de telle manière que plusieurs raccords rapides en croix (1) puissent être reliés entre eux par l'intermédiaire des barrettes de raccordement en incluant entre chacun un point de rupture pour former un produit en barre ou en rouleau comprenant plusieurs raccords rapides en croix (1) assemblés entre eux.
